(19) Europäisches Patentamt / European Patent Office / Office européen des brevets

(11) **EP 3 234 519 B1**

(12) **EUROPÄISCHE PATENTSCHRIFT**

(45) Veröffentlichungstag und Bekanntmachung des Hinweises auf die Patenterteilung:
**23.02.2022   Patentblatt 2022/08**

(21) Anmeldenummer: **15808557.1**

(22) Anmeldetag: **03.12.2015**

(51) Internationale Patentklassifikation (IPC):
**G01F 25/00** (2022.01)    **G01F 1/684** (2006.01)
**G01F 1/69** (2006.01)    **G01P 5/12** (2006.01)

(52) Gemeinsame Patentklassifikation (CPC):
**G01F 1/6842; G01F 1/69; G01F 25/10; G01P 5/12**

(86) Internationale Anmeldenummer:
**PCT/EP2015/078527**

(87) Internationale Veröffentlichungsnummer:
**WO 2016/096459 (23.06.2016 Gazette 2016/25)**

(54) **THERMISCHES DURCHFLUSSMESSGERÄT MIT DIAGNOSEFUNKTION**

THERMAL FLOW METER HAVING DIAGNOSTIC FUNCTION

DÉBITMÈTRE THERMIQUE MUNI D'UNE FONCTION DE DIAGNOSTIC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2014   DE 102014119231**

(43) Veröffentlichungstag der Anmeldung:
**25.10.2017   Patentblatt 2017/43**

(73) Patentinhaber: **Endress+Hauser Flowtec AG**
**4153 Reinach (CH)**

(72) Erfinder:
• **ARNOLD, Martin**
**4153 Reinach (CH)**

• **PFAU, Axel**
**79664 Wehr (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**DE-A1-102005 057 687     DE-A1-102005 057 689**
**DE-A1-102009 045 956     DE-A1-102010 040 285**

**Beschreibung**

Die Erfindung betrifft ein thermisches Durchflussmessgerät, insbesondere ein thermisches Durchflussmessgerät zur Bestimmung und/oder Überwachung des Massedurchflusses und/oder der Durchflussgeschwindigkeit eines strömungsfähigen Mediums durch eine Rohrleitung mit zumindest drei Sensorelementen und einer Elektronikeinheit, sowie ein Verfahren zum Betreiben eines solchen Durchflussmessgeräts. Ferner kann eine Aussage über den Zustand von zumindest einem der zumindest drei Sensorelemente getroffen werden. Das Durchflussmessgerät weist also eine Diagnosefunktion auf.

Thermische Durchflussmessgeräte finden vielfach Anwendung im Bereich der Prozessmesstechnik. Entsprechende Feldgeräte werden von der Anmelderin beispielsweise unter der Bezeichnung t-switch, t-trend oder t-mass hergestellt und vertrieben. Die zugrundeliegenden Messprinzipien sind entsprechend aus einer Vielzahl von Veröffentlichungen bekannt.

Typischerweise umfasst ein gattungsgemäßes Durchflussmessgerät zumindest zwei Sensorelemente, wovon jedes einen möglichst gleichartig ausgestalteten Temperatursensor aufweist, und zumindest eines der Sensorelemente beheizbar ausgestaltet ist. Dazu kann innerhalb des jeweiligen Sensorelements entweder eine zusätzliche Widerstandsheizung integriert werden. Alternativ kann aber der Temperatursensor auch selbst als Widerstandselement, z. B. in Form eines RTD- Widerstandselements (Resistance Temperature Detector), insbesondere in Form eines Platinelements, wie es unter den Bezeichnungen PT10, PT100, und PT1000 auch kommerziell erhältlich ist, ausgebildet sein. Das Widerstandselement, auch als Widerstandsthermometer bezeichnet, wird dann über die Umsetzung einer ihm zugeführten elektrischen Leistung, z. B. in Folge einer erhöhten Stromzufuhr, erwärmt.

Oftmals ist der Temperatursensor innerhalb einer zylindrischen Hülse, insbesondere einer Hülse aus einem Metall, insbesondere aus Edelstahl oder Hastelloy, angeordnet. Die Hülse hat dann die Funktion eines Gehäuses, welches den Temperatursensor beispielsweise vor aggressiven Medien schützt. Bei dem jeweils zumindest einen beheizbaren Temperatursensor muss zudem gewährleistet sein, dass zwischen dem beheizbaren Temperatursensor und der Hülse ein möglichst guter thermischer Kontakt besteht.

Zur Erfassung des Massedurchflusses und/oder der Strömungsgeschwindigkeit werden die zumindest zwei Sensorelemente in eine von einem strömungsfähigen Medium zumindest zeitweise und teilweise durchströmte Rohrleitung eingebracht, derart, dass sie mit dem Medium in thermischem Kontakt stehen. Sie können dazu entweder direkt in die Rohrleitung eingebracht werden, oder in ein Messrohr integriert werden, welches in eine bestehende Rohrleitung einbaubar ist. Beide Möglichkeiten sind Gegenstand der vorliegenden Erfindung, auch wenn im Folgenden stets nur von einer Rohrleitung die Rede sein wird.

Im Betrieb wird zumindest einer der zumindest zwei Temperatursensoren beheizt (aktiver Temperatursensor) während der zweite Temperatursensor unbeheizt bleibt (passiver Temperatursensor). Der passive Temperatursensor wird zur Erfassung der Temperatur des strömungsfähigen Mediums eingesetzt. Unter der Mediumstemperatur sei dabei jene Temperatur verstanden, welche das Medium ohne einen zusätzlichen Wärmeeintrag einer Heizeinheit aufweist. Das aktive Sensorelement wird üblicherweise entweder so beheizt, dass sich eine feste Temperaturdifferenz zwischen den beiden Temperatursensoren einstellt, wobei die Änderung der Heizleistung als Maß für den Massedurchfluss und/oder die Durchflussgeschwindigkeit herangezogen wird. Alternativ kann aber auch die eingespeiste Heizleistung zeitlich konstant gehalten werden, so dass die entsprechende Temperaturänderung zur Bestimmung des Massedurchflusses und/oder der Durchflussgeschwindigkeit heranzuziehen ist.

Ist in der Rohrleitung keine Strömung vorhanden, erfolgt die Ableitung der Wärme von dem aktiven Temperatursensor über Wärmeleitung, Wärmestrahlung und ggf. auch über freie Konvektion innerhalb des Mediums. Zur Aufrechterhaltung einer bestimmten Temperaturdifferenz wird dann beispielsweise eine zeitlich konstante Wärmemenge benötigt. Beim Vorliegen einer Strömung hingegen kommt es zu einer zusätzlichen Abkühlung des aktiven Temperatursensors durch das vorbeiströmende kältere Medium. Es tritt ein zusätzlicher Wärmetransport aufgrund von erzwungener Konvektion auf. Entsprechend muss also in Folge einer Strömung entweder eine erhöhte Heizleistung eingespeist werden, um eine feste Temperaturdifferenz aufrecht erhalten zu können, oder aber die Temperaturdifferenz zwischen dem aktiven und passiven Temperatursensor verringert sich.

Dieser funktionale Zusammenhang zwischen der dem aktiven Temperatursensor zugeführten Heizleistung bzw. der Temperaturdifferenz und dem Massedurchfluss und/oder der Durchflussgeschwindigkeit des Mediums durch die Rohrleitung kann mittels des sogenannten Wärmeübertragungskoeffizienten ausgedrückt werden. Die Abhängigkeit des Wärmeübertragungskoeffizienten vom Massedurchfluss des Mediums durch die Rohrleitung wird dann zu dessen Bestimmung und/oder der Bestimmung der Durchflussgeschwindigkeit ausgenutzt. Daneben haben die thermophysikalischen Eigenschaften des Mediums sowie der in der Rohrleitung herrschende Druck einen Einfluss auf den gemessenen Durchfluss. Um auch der Abhängigkeit des Durchflusses von diesen Größen Rechnung zu tragen, sind beispielsweise die thermophysikalischen Eigenschaften in Form von Kennlinien oder als Bestandteile funktionaler Bestimmungsgleichungen innerhalb einer Elektronikeinheit des Durchflussmessgeräts hinterlegt.

Mittels eines thermischen Durchflussmessgeräts lässt sich nicht ohne weiteres zwischen einer vorwärts gerichteten und einer rückwärtsgerichteten Strömung unterscheiden. Dabei sei unter der Strömungsrichtung hier die makroskopische Strömungsrichtung verstanden, für welche partiell auftretende Wirbel oder Richtungsabweichungen nicht in Betracht gezogen werden. Ist die Strömungsrichtung nicht bekannt, so kann es insbesondere bei einer zeitlich nicht konstanten oder auch sehr niedrigen Strömung jedoch nachteilig zu erheblichen Messfehlern bei der Bestimmung des Massedurchflusses und/oder der Durchflussgeschwindigkeit kommen.

Somit sind verschiedene thermische Durchflussmessgeräte entwickelt und offenbart worden, welche neben der Bestimmung des Massedurchflusses und/oder der Durchflussgeschwindigkeit eine Zusatzfunktionalität zur Strömungsrichtungserkennung aufweisen. Zur Ermittlung der Strömungsrichtung wird häufig ausgenutzt, dass unterschiedliche lokale Strömungen, welche das jeweilige Sensorelement unmittelbar umgeben, zu unterschiedlichen Abkühlraten des jeweiligen Sensorelements bei jeweils gleicher zugeführter Heizleistung führen. Unterschiedliche lokale Strömungen lassen sich beispielsweise durch die Integration eines Staukörpers in die Rohrleitung in unmittelbarer Umgebung von zumindest einem der zumindest zwei Sensorelemente durch eine in Bezug auf das Strömungsprofil nicht äquivalente Anordnung der zumindest zwei Sensorelemente, oder auch durch unterschiedliche geometrische Ausgestaltungen der zumindest zwei Sensorelemente realisieren.

Bei dem Durchflussmessgerät gemäß der DE102010040285A1 ist beispielsweise eine Platte innerhalb eines Messrohres auf einer Verbindungslinie zwischen einem ersten und einem zweiten beheizbaren Temperatursensor angeordnet. Anhand des Vergleichs der sogenannten Entscheidungskoeffizienten, welche sich aus den jeweiligen Heizleistungen und Temperaturen der zumindest zwei beheizbaren Temperatursensoren ergeben, wird dann die Strömungsrichtung des Mediums ermittelt. Diese Entscheidungskoeffizienten werden ebenfalls in den Patentveröffentlichungen DE102009045956A1 und DE102009045958A1 zur Bestimmung der Strömungsrichtung herangezogen. Dabei weist das Durchflussmessgerät gemäß der DE102009045956A1 einen strömungsführenden Körper auf, welcher gemeinsam mit einem beheizbaren Temperatursensor in einer Linie im Wesentlichen parallel zur Rohrleitungsachse angeordnet ist, und wobei ein weiterer Temperatursensor davon beabstanded angeordnet ist. Dagegen sind bei dem Durchflussmessgerät aus der DE102009045958A1 zumindest zwei beheizbare Temperatursensoren in zwei Hülsenabschnitten angeordnet, wobei die zumindest zwei Hülsenabschnitte in zumindest zwei Richtungen bezogen auf die Messrohrachse zeigen.

In der DE102007023840B4 wird ein thermisches Durchflussmessgerät mit Strömungsrichtungserkennung beschrieben, welches zumindest drei Sensorelemente umfasst, wovon zwei Sensorelemente in Strömungsrichtung aufeinanderfolgend angeordnet sind und wobei zumindest eines dieser zwei Sensorelemente beheizt ist, und zumindest zeitweise in Bezug auf die Strömungsrichtung das beheizte vor dem nicht beheizten Sensorelement angeordnet ist, und zeitweise das nicht beheizte vor dem beheizten Sensorelement angeordnet ist. Das dritte Sensorelement ist ferner periodisch kurzzeitig beheizbar und außerhalb der Strömung über die ersten beiden Sensorelementen angeordnet. Die Abweichung der jeweils gewonnenen Messwerte ist dann ein Maß für die Strömungsrichtung des Mediums.

Weitere Ursachen für eine gegebenenfalls erhebliche Messwertverfälschung bestehen beispielsweise in einer Änderung des Wärmewiderstands von zumindest einem der verwendeten Sensorelemente, welche zu einem Wechsel des Wärmeübergangs von der Heizeinheit in das Medium bei ansonsten gleich bleibenden Strömungsbedingungen führen kann. Eine solche Änderung des Wärmewiderstands wird auch als Sensordrift bezeichnet. Unter Umständen, wenn die Änderung des effektiven thermischen Widerstandes unter einem bestimmten vorgebbaren Grenzwert verbleibt, und falls die Änderung erkannt wird, kann die Sensordrift sowie der negative Einfluss auf die Bestimmung des Massedurchflusses und/oder der Durchflussgeschwindigkeit durch geeignete Gegenmaßnahmen zumindest teilweise behoben werden. Ansonsten muss ggf. das Durchflussmessgerät zumindest teilweise ausgetauscht werden.

Grundsätzlich werden in Bezug auf den Wärmewiderstand ein innerer und ein äußerer Wärmewiderstand unterschieden. Der innere Wärmewiderstand hängt u.a. von einzelnen Bauteilen innerhalb des Sensorelements, z.B. innerhalb der Hülsen, ab. So kann eine Sensordrift durch Fehlstellen bei Lötanbindungen aufgrund von Zugbelastungen durch Materialausdehnung oder dergleichen zustande kommen. Der äußere Wärmewiderstand wird dagegen durch Belagsbildung, Materialabtrag oder Materialumwandlung (z.B. Korrosion) an den das Medium berührenden Flächen des jeweiligen Sensorelements beeinflusst. Eine Änderung des äußeren thermischen Widerstands ist somit insbesondere im Langzeitbetrieb und/oder bei Kontakt mit aggressiven Medien relevant. Im Falle von gas- oder dampfförmigen Medien kann die Messung des Massedurchflusses oder der Durchflussgeschwindigkeit darüber hinaus auch durch Kondensatsbildung an zumindest einem der Temperatursensoren beeinträchtigt werden.

Aus dem Stand der Technik sind mehrere Durchflussmessgeräte bekannt geworden, mittels welcher sich eine Diagnose über zumindest eines der jeweils verwendeten Sensorelemente tätigen lässt. Es lässt sich also eine Aussage über den Zustand von zumindest einem der jeweils verwendeten Sensorelemente treffen.

Die DE102005057687A1 beschreibt ein thermisches Durchflussmessgerät mit zumindest zwei beheizbar ausgestalteten Temperatursensoren, wobei der erste Temperatursensor und der zweite Temperatursensor alternierend als passiver, nicht beheizter Temperatursensor, der während eines ersten Messintervalls Information über die aktuelle Temperatur des Mediums bereitstellt, und als aktiver beheizter Temperatursensor, der während eine zweiten Messintervalls Information über den Massedurchfluss des Mediums durch die Rohrleitung bereitstellt, ansteuerbar. Eine Regel-/Auswerteeinheit gibt eine Meldung aus und/oder nimmt eine Korrektur vor, sobald die während des ersten Messintervalls und des zweiten Messintervalls bereitgestellten korrespondierenden Messwerte der beiden Temperatursensoren voneinander abweichen. Auf diese Weise können Belagsablagerungen und Kondensatsbildung erkannt werden.

Ähnlich ist in der DE102007023823A1 ist ein thermisches Durchflussmessgerät mit zwei phasenweise abwechselnd oder alternierend beheizbaren Sensorelementen sowie ein Verfahren zu dessen Betrieb offenbart. Der Massedurchfluss wird dann abwechselnd anhand des jeweils beheizten Sensorelements ermittelt, wobei das jeweils nicht beheizte Sensorelement zur Ermittlung der Mediumstemperatur herangezogen wird. Aus einem Vergleich der mit den beiden Sensorelementen gewonnen Messwerte kann zusätzlich eine Verschmutzung zumindest eines der beiden Sensorelemente erkannt werden.

Schließlich sind in der US8590360B2 beschrieben, ein erstes beheizbares Sensorelement mit einer ersten Heizleistung zu heizen oder kühlen, und gleichzeitig ein zweites beheizbares Sensorelement mit einer zweiten Heizleistung zu heizen oder zu kühlen. Typischerweise werden die beiden Heizleistungen so gewählt, dass sich die Temperaturen der beiden Sensorelemente unterscheiden. Durch einen Vergleich der Mediumstemperatur, und/oder von zumindest zwei unabhängigen die Wärmeübergangskoeffizienten charakterisierenden Größen kann dann eine Diagnose über das Durchflussmessgerät gefällt werden.

Die meisten der genannten Durchflussmessgeräte, welche sich zur Diagnose einer Belags- und/oder Kondensatsbildung oder zur Aussage über den Zustand zumindest einen Sensorelements eignen, sind jedoch nicht in der Lage, gleichzeitig den Durchfluss und die Diagnose, oder gleichzeitig den Durchfluss und die Strömungsrichtung, oder beides, zu ermitteln. Bei den jeweils angewendeten Messprinzipien werden die einzelnen Sensorelemente zeitweise beheizt, und dienen zeitweise der Erfassung der Mediumstemperatur. Entsprechend muss bei jedem Wechsel der Temperatur für eines der Sensorelemente bis zur nächsten Messwerterfassung so lange gewartet werden, bis sich die neue Temperatur jeweils stabil eingestellt hat. Somit können beispielsweise der Massedurchfluss und/oder die Durchflussgeschwindigkeit nicht kontinuierlich bestimmt werden. Entsprechend setzen die jeweils angewendeten Verfahren zumindest über den Zeitraum, welcher jeweils bis zur stabilen Einstellung einer neuen Temperatur von zumindest einem Sensorelemente benötigt wird, eine nahezu konstante Durchflussrate des Mediums durch die Rohrleitung voraus. Jedoch ist es in der Praxis häufig so, dass die Durchflussraten mit der Zeit zumindest geringfügig variieren, was dann zu einem verfälschten Messergebnis führen kann. Dies ist insbesondere bei hohen Durchflussraten problematisch.

Ausgehend vom genannten Stand der Technik liegt der vorliegenden Erfindung die Aufgabe zugrunde, ein thermisches Durchflussmessgerät sowie ein Verfahren zum Betreiben eines entsprechenden Durchflussmessgeräts bereitzustellen, mittels welchem der Massedurchfluss und/oder die Durchflussgeschwindigkeit möglichst genau bestimmt werden können.

Bezüglich der Vorrichtung wird diese Aufgabe gelöst durch ein Thermisches Durchflussmessgerät zur Bestimmung und/oder Überwachung des Massedurchflusses und/oder der Durchflussgeschwindigkeit eines strömungsfähigen Mediums durch eine Rohrleitung mit zumindest drei Sensorelementen und einer Elektronikeinheit,

wobei jedes der zumindest drei Sensorelemente

- zumindest teilweise und/oder zeitweise mit dem Medium in thermischem Kontakt steht, und
- einen beheizbaren Temperatursensor umfasst,

wobei die Elektronikeinheit dazu ausgestaltet ist,

- jedes der drei Sensorelemente mit einer Heizleistung zu heizen,
- dessen Temperatur zu erfassen,
- zumindest zwei der zumindest drei Sensorelemente gleichzeitig zu heizen,
- kontinuierlich den Massedurchfluss und/oder die Durchflussgeschwindigkeit des Mediums zu ermitteln, gleichzeitig

eine Aussage über den Zustand von zumindest einem der zumindest drei Sensorelemente zu treffen, und im Falle dass eine Fehlfunktion und/oder eine Belagsbildung an zumindest einem der zumindest drei Sensorelemente auftritt, eine Korrektur des Messwerts für den Massedurchfluss und/oder die Durchflussgeschwindigkeit durchzuführen und/oder eine Meldung über den Zustand des zumindest einen Sensorelements zu generieren und auszugeben.

Die zugeführte Heizleistung kann dabei entweder konstant sein, also einem festen Wert entsprechen, oder aber einstellbar, derart, dass im laufenden Betrieb die zugeführte Heizleistung geändert, gesteuert und/oder geregelt werden kann.

Die Elektronikeinheit muss also in der Lage sein, jedes der drei Sensorelemente unabhängig voneinander, sowie zumindest zwei gleichzeitig, zu beheizen. Zumindest eines der Sensorelemente bleibt ferner unbeheizt und dient der Erfassung der Mediumstemperatur. Im Falle, dass zur Bestimmung des Massedurchfluss und/oder der Durchflussgeschwindigkeit eine konstante Temperaturdifferenz zwischen zumindest einem beheizten Sensorelement und demjenigen, welches die Mediumstemperatur anzeigt, eingestellt wird, sollte die Elektronikeinheit zumindest zwei Regeleinheiten zur Regelung der jedem der jeweils beheizten Sensorelemente zugeführten Heizleistung aufweisen. So kann beispielsweise eines der zumindest zwei beheizten Sensorelemente zur Ermittlung des Massedurchflusses und/oder der Durchflussgeschwindigkeit und das andere zur Diagnose eingesetzt werden. Vorteilhaft ist für jedes der beheizten Sensorelemente eine separate Regeleinheit vorhanden, damit im laufenden Betrieb jede mögliche Kombination jeweils beheizter und nicht beheizter Sensorelemente auswählbar ist. Wird der Massedurchfluss und/oder die Durchflussgeschwindigkeit jedoch aus der Temperaturdifferenz, welche sich bei Zuführung einer konstanten Heizleistung zwischen einem beheizten und einem unbeheizten Sensorelement ergibt, so sollte jedem der drei Sensorelemente individuell eine bestimmbare jedoch konstante Heizleistung zugeführt werden können. Es können dann sowohl die Temperaturdifferenzen zwischen jeweils einem der beheizten Sensorelemente und jenem welches die Mediumstemperatur erfasst, verglichen werden, als auch die Temperaturdifferenzen zwischen zwei auf unterschiedliche Temperaturen geheizten Sensorelementen.

Dadurch, dass jedes der zumindest drei Sensorelemente einzeln beheizbar ist, und dadurch, dass jeweils zumindest zwei der zumindest drei Sensorelemente gleichzeitig beheizbar sind, können der Massedurchfluss und/oder die Durchflussgeschwindigkeit kontinuierlich und sehr genau bestimmt werden. Gleichzeitig ist eine Diagnose, also eine Aussage über den Zustand von zumindest einem der zumindest drei Sensorelemente möglich. Ein weiterer Vorteil in Bezug auf ein erfindungsgemäßes Durchflussmessgerät liegt darin, dass nicht nur eine Aussage darüber möglich ist, dass zumindest eines der zumindest drei Sensorelemente einen Sensordrift zeigt, sondern falls möglich auch darüber, welches der zumindest drei Sensorelemente betroffen ist. Dann kann im Falle von Sensordrift an einem der Sensorelemente der Durchfluss immer noch genau bestimmt werden kann. Wird nämlich beispielsweise für ein erstes Sensorelement eine Sensordrift detektiert, kann unterbrechungslos auf ein zweites Sensorelement zur Bestimmung des Massedurchfluss und/oder Durchflussgeschwindigkeit umgeschaltet werden.

In einer besonders bevorzugten Ausführung ist die Elektronikeinheit dazu ausgestaltet, die Strömungsrichtung des strömungsfähigen Mediums zu bestimmen. Ein dieser Ausgestaltung entsprechendes Durchflussmessgerät bietet dann also neben der Zusatzfunktionalität, eine Diagnose stellen zu können, bzw. eine Aussage über den Zustand zumindest eines Sensorelements treffen zu können, auch eine Strömungsrichtungserkennung. Dies erhöht die erreichbare Messgenauigkeit noch weiter.

Eine weitere Ausgestaltung beinhaltet, dass die Elektronikeinheit dazu ausgestaltet ist, unterbrechungslos, also kontinuierlich, den Massedurchfluss und/oder die Durchflussgeschwindigkeit zu ermitteln, die Strömungsrichtung des Mediums zu bestimmen und/oder eine Aussage über den Zustand von zumindest einem der zumindest drei Sensorelemente zu treffen.

Es ist von Vorteil, wenn zumindest eines der zumindest drei Sensorelemente eine erste Ausgestaltung bezogen auf die Geometrie, Aufbau und Material, aufweist, und zumindest ein zweites der zumindest drei Sensorelemente eine zweite von der ersten verschiedene Ausgestaltung aufweist. Es ist ferner von Vorteil, wenn zumindest zwei der zumindest drei Sensorelemente an in Bezug auf die es jeweils lokal umgebende Strömung des Mediums zwei ersten äquivalenten Positionen innerhalb der Rohrleitung angeordnet sind, und wobei zumindest eines der zumindest drei Sensorelemente an einer in Bezug auf die es lokal umgebende Strömung des Mediums zweiten von der ersten verschiedenen Position innerhalb der Rohrleitung angeordnet ist. Durch die unterschiedlichen geometrischen Ausgestaltungen und/oder Anordnungen der einzelnen Sensorelemente innerhalb der Rohrleitung ist auch jeweils die durch die Strömung des Mediums hervorgerufene Abkühlrate an jedem der Sensorelemente unterschiedlich. Dies wirkt sich insbesondere vorteilhaft in Bezug auf die Erkennung der Strömungsrichtung aus, aber auch auf die Diagnose über Sensordrift. Der Grund hierfür liegt darin, dass sich die Kennlinien bzw. die funktionalen Abhängigkeiten zwischen den Temperaturen, den zugeführten Heizleistungen, sowie den thermophysikalischen Eigenschaften und auch weiterer Parameter der einzelnen Sensorelemente für eine vorwärts und rückwärtsgerichtete Strömung unterscheiden.

In einer bevorzugten Ausgestaltung ist zumindest eines der zumindest drei Sensorelemente in Bezug auf die Längsachse durch die Rohrleitung in unmittelbarer Umgebung vor oder hinter einem Staukörper, oder einem anderen strömungsbeeinflussenden Modul, angeordnet. Dabei ist es von Vorteil, wenn die Querschnittsfläche des Staukörpers ein

Dreieck, ein Rechteck, ein Parallelogramm, ein Trapez, ein Kreis oder ein Ellipse ist. Durch diese Maßnahme wird das lokale das jeweilige Sensorelement umgebende Strömungsprofil im Vergleich zu einem nicht hinter einem Staukörper angeordneten Sensorelement, oder im Vergleich zu einem hinter einem Staukörper unterschiedlicher Geometrie angeordneten Sensorelement, gezielt verändert. Der Effekt, welcher durch die Integration eines Staukörpers erreicht wird, ist dabei in der Regel größer als derjenige, welcher sich durch unterschiedliche geometrische Ausgestaltungen oder Anordnungen ergibt.

Gemäß einer besonders bevorzugten Ausgestaltung umfasst das thermische Durchflussmessgerät genau drei Sensorelemente, wobei zumindest eines der drei Sensorelemente in unmittelbarer Umgebung eines Staukörpers, oder eines anderen strömungsbeeinflussenden Moduls angeordnet ist. Dabei ist es von Vorteil, wenn das erste und das zweite Sensorelement symmetrisch auf gegenüberliegenden Seiten einer gedachten Achse parallel zur Rohrleitung angeordnet sind, wobei das dritte Sensorelement auf der gedachten Achse angeordnet ist, und wobei zwischen der gedachten Verbindungslinie durch das erste und das zweite Sensorelement und dem dritten Sensorelement ein Staukörper angeordnet ist, dessen Abstand zum dritten Sensorelement geringer ist als derjenige zu der gedachten Verbindungslinie.

Die erfindungsgemäße Aufgabe wird ferner gelöst durch ein Verfahren zum Betreiben eines thermischen Durchflussmessgeräts zur Bestimmung und/oder Überwachung des Massedurchflusses und/oder einer der Durchflussgeschwindigkeit eines strömungsfähigen Mediums durch eine Rohrleitung mit zumindest drei Sensorelementen und einer Elektronikeinheit-nach zumindest einem der vorhergehenden Ansprüche, in einem Normalbetriebsmodus und in einem Diagnosemodus, wobei im Normalbetriebsmodus zumindest eines der zumindest drei Sensorelemente mit einer einstellbaren Heizleistung beheizt, und dessen Temperatur erfasst wird, und der Massedurchfluss und/oder die Durchflussgeschwindigkeit des Mediums bestimmt wird, und wobei im Diagnosemodus zumindest folgende Ablaufschritte durchgeführt werden:

- ein erstes Sensorelement wird mit einer ersten Heizleistung beheizt und dessen Temperatur erfasst,
- ein zweites Sensorelement wird mit einer zweiten Heizleistung beheizt und dessen Temperatur erfasst,
- die Temperatur des Mediums wird mittels eines nicht beheizten dritten Sensorelements erfasst,
- aus der Heizleistung und/oder Temperatur des ersten oder zweiten Sensorelements und/oder zumindest einer aus zumindest einer dieser Größen abgeleiteten Größe wird kontinuierlich der Massedurchfluss und/oder die Durchflussgeschwindigkeit des Mediums bestimmt, und gleichzeitig
- aus einem paarweisen Vergleich der Temperaturen und/oder Heizleistungen des ersten und/oder zweiten Sensorelements und der Temperatur des dritten Sensorelements und/oder aus zumindest einer aus den Temperaturen und/oder Heizleistungen abgeleiteten Größe wird eine Aussage über den Zustand von zumindest einem der zumindest drei Sensorelemente getroffen und/oder eine Korrektur des Messwerts für den Massedurchfluss und/oder die Durchflussgeschwindigkeit durchgeführt und/oder eine Meldung über den Zustand von zumindest einem der zumindest drei Sensorelemente generiert und ausgegeben.

Auf diese Weise können Massedurchfluss und/oder die Durchflussgeschwindigkeit kontinuierlich und genau bestimmt werden. Gleichzeitig ist eine Diagnose, also eine Aussage über den Zustand von zumindest einem der zumindest drei Sensorelemente möglich. Die Diagnose beschränkt sich nicht nur auf eine Aussage darüber, dass sich für zumindest eines der Sensorelemente der thermische Widerstand geändert hat. Das erfindungsgemäße Verfahren ermöglicht es unter gewissen Umständen vielmehr, eine Aussage darüber zu treffen, für welches der drei Sensorelemente sich der thermische Widerstand geändert hat, bzw. für welches der thermische Widerstand konstant geblieben ist. Dabei können die zugeführten Heizleistungen und/oder die Temperaturen für jeweils zumindest zwei gleichzeitig beheizte Sensorelemente entweder auf den gleichen Wert oder auch auf unterschiedliche Werte eingestellt werden.

Eine bevorzugte Variante des erfindungsgemäßen Verfahrens beinhaltet, dass das aus einem paarweisen Vergleich der Temperaturen und/oder Heizleistungen und/oder aus zumindest einer aus den Temperaturen und/oder Heizleistungen abgeleiteten Größe die Strömungsrichtung des Mediums ermittelt wird.

In einer weiteren bevorzugten Ausgestaltung des Verfahrens werden der Massedurchfluss, die Durchflussgeschwindigkeit, die Strömungsrichtung des Mediums und/oder eine Aussage über den Zustand von zumindest einem der zumindest drei Sensorelemente unterbrechungslos und zeitgleich ermittelt.

Es ist ferner von Vorteil, wenn vor dem gleichzeitigen Heizen von zumindest zwei der zumindest drei Sensorelemente mit jeweils einer einstellbaren Heizleistung ein Abgleich der gemessenen Mediumstemperaturen vorgenommen wird, und gegebenenfalls ein Temperaturkorrekturterm errechnet und auf alle folgenden Messungen angewendet wird. Dabei sind folgende Fälle denkbar: Bei Inbetriebnahme des Durchflussmessgeräts werden ein erstes und ein zweites Sensorelement aufgeheizt. Bevor diesen Sensorelementen jeweils eine Heiztemperatur zugeführt wird, wird mit beiden, oder auch mit allen Sensorelementen die Mediumstemperatur bestimmt. Weichen die unabhängig voneinander gemessenen Werte voneinander ab, wird ein Temperaturkorrekturterm errechnet. Somit lassen sich aufgrund nicht vermeidbarer Fertigungstoleranzen abweichende Messwerte und Unterschiede bei den jeweiligen Kalibrationen ausgleichen. Ein andere Fall beinhaltet, dass falls während des Betriebs zwischen den jeweils beheizten Sensorelementen hin und hergewechselt wird, ein weiterer Temperaturvergleich vorgenommen wird. Dabei kann es sich entweder um die Mediumstemperatur handeln, oder aber um die Temperaturen bei gleicher zugeführter Heizleistung.

Eine bevorzugte Ausgestaltung beinhaltet, dass ein Vergleich der Power-Koeffizienten PC der zumindest drei Sensorelemente durchgeführt wird Der Power-Koeffizient PC ergibt sich aus einem Vergleich der einem beheizbaren Sensorelement S zugeführten Heizleistung P, sowie dessen Temperatur T mit der mittels eines weiteren unbeheizten Sensorelements $S_M$ ermittelten Mediumstemperatur $T_M$ und ist definiert als

$$PC(S, S_M) = \frac{P}{T - T_M}.$$

Eine weitere bevorzugte Ausgestaltung des Verfahrens ist für ein thermisches Durchflussmessgerät mit genau drei Sensorelementen ausgelegt und umfasst folgende Verfahrensschritte:

im Normalbetriebsmodus wird dem ersten Sensorelement eine erste Heizleistung zugeführt, dessen Temperatur erfasst, und der Massedurchfluss und/oder die
Durchflussgeschwindigkeit bestimmt,
in einem ersten Zeitintervall des Diagnosemodus werden

- das erste und das zweite Sensorelement beheizt,
- der Massedurchfluss und/oder die Durchflussgeschwindigkeit anhand des ersten Sensorelements bestimmt, und
- ein Vergleich der Power-Koeffizienten PC(S1 ,S3) und PC(S2,S3) durchgeführt,

in einem zweiten Zeitintervall des Diagnosemodus werden

- das erste und das dritte Sensorelement beheizt,
- der Massedurchfluss und/oder die Durchflussgeschwindigkeit anhand des ersten Sensorelements bestimmt, und
- ein Vergleich der Power-Koeffizienten PC(S1 ,S2) und PC(S3,S2) durchgeführt, und daraus die Richtung des strömenden Mediums ermittelt, und

in einem dritten Zeitintervall des Diagnosemodus werden

- das zweite und das dritte Sensorelement beheizt,
- der Massedurchfluss und/oder die Durchflussgeschwindigkeit anhand des zweiten Sensorelements bestimmt, und
- ein Vergleich der Power-Koeffizienten PC(S2,S1) und PC(S3,S1) durchgeführt, und daraus die Richtung des strömenden Mediums ermittelt.

Anhand der Vergleiche der Power-Koeffizienten in den drei Zeitintervallen wird dann eine Aussage über den Zustand von zumindest einem der zumindest drei Sensorelemente getroffen und eine Korrektur des Messwerts für den Massedurchfluss und/oder die Durchflussgeschwindigkeit durchgeführt und/oder eine Meldung über den Zustand des zumindest einen Sensorelements generiert und ausgegeben.
Es versteht sich von selbst, dass im Falle, dass das thermische Durchflussmessgerät mehr als drei Sensorelemente aufweist, der Diagnosemodus gegebenenfalls mehr als drei Zeitintervalle aufweist.
Ein Vergleich der Power-Koeffizienten verschiedener Sensorelemente kann beispielsweise anhand der eingangs bereits erwähnten sogenannten Entscheidungskoeffizienten DC durchgeführt werden. Der Entscheidungskoeffizient DC(S2,S1) zwischen zwei Sensorelementen S1 und S2 ist definiert als

$$DC(S_2, S_1) = \frac{PC_2 - PC_1}{PC_1}$$

wobei $PC_1$ und $PC_2$ die Powerkoeffizienten des ersten und zweiten Sensorelements $S_1$ und $S_2$ sind.
Je nachdem, ob und wenn ja für welches der zumindest drei Sensorelemente eine Änderung des thermischen Widerstands vorliegt, müssen gegebenenfalls nicht alle drei Zeitintervalle durchlaufen werden.
Schließlich lässt sich erfindungsgemäß auch auf eine Drift des elektrischen Widerstands innerhalb zumindest eines der zumindest drei Sensorelemente schließen. Ein Sensorelement kann auch ohne das Auftreten einer Änderung des thermischen Widerstands driften. Dies führt zu einer Änderung einer Kennlinie des elektrischen Widerstands als Funktion der Temperatur des zumindest einen Sensorelements, woraus eine fehlerhafte Temperaturmessung resultiert. Eine Änderung des elektrischen Widerstands innerhalb zumindest eines Sensorelements kann nun aus einem paarweisen Vergleich der Power-Koeffizienten erkannt bzw. ermittelt werden, und zwar im unbeheizten Zustand des zumindest einen Sensorelements, beispielsweise anhand der Phasen bei der Bestimmung der Temperaturkorrekturterme. Wenn die aktuell gemessenen Temperaturkorrekturterme von denjenigen, welche zum Zeitpunkt der Fertigung des jeweiligen Sensorelements bestimmt und beispielsweise innerhalb der Elektronikeinheit hinterlegt sind, abweichen, und die Abweichung einen vorgebbaren Grenzwert überschreitet, kann aus der Abweichung auf eine Änderung des elektrischen Widerstands geschlossen werden. Auf diese Weise lässt sich zwischen einer Änderung des thermischen Widerstands und einer Änderung des elektrischen Widerstands unterscheiden.
Die Erfindung sowie ihre Vorteile werden anhand der nachfolgenden Figuren Fig. 1 bis Fig. 5 näher erläutert. Es zeigen

Fig. 1 eine schematische Zeichnung eines thermischen Durchflussmessgeräts gemäß Stand der Technik,

Fig. 2 eine schematische Zeichnung eines thermischen Durchflussmessgeräts mit drei Sensorelementen gemäß Anspruch 4 und/oder Anspruch 5

Fig. 3 eine schematische Zeichnung eines thermischen Durchflussmessgeräts mit drei Sensorelementen, wovon eines hinter einem Staukörper angeordnet ist,

Fig. 4 einen Verlauf der Entscheidungs-Koeffizienten-Kennlinien in Abhängigkeit von der Reynoldszahl bei unterschiedlicher Strömungsrichtung, und

Fig. 5 ein Blockschaltbild eines möglichen Auswerteverfahrens.

In den Figuren sind gleiche Merkmale mit gleichen Bezugszeichen gekennzeichnet. Die erfindungsgemäße Vorrichtung in ihrer Gesamtheit hat das Bezugszeichen 1. Striche an einem Bezugszeichen weisen jeweils auf unterschiedliche Ausführungsbeispiele hin.

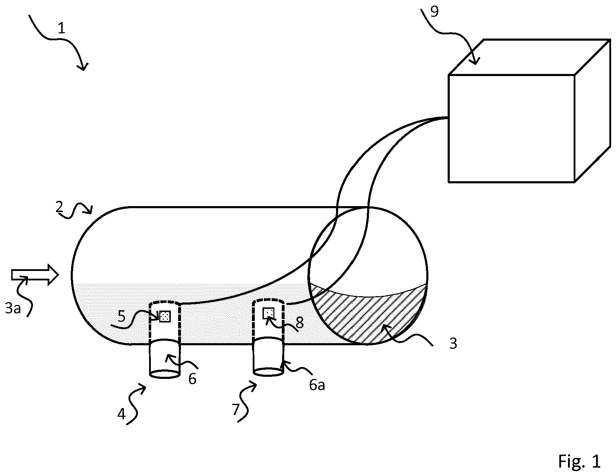

In Fig. 1 ist ein thermisches Durchflussmessgerät 1 gemäß Stand der Technik gezeigt. In eine von einem Medium 3 durchströmte Rohrleitung 2 sind zwei Sensorelemente 4,7 dicht integriert derart, dass sie zumindest teilweise und zumindest zeitweise mit dem Medium 3 in thermischem Kontakt stehen. Jedes der beiden Sensorelemente 4,7 umfasst ein Gehäuse 6,6a, welches in diesem Falle zylindrisch ausgestaltet ist, in welchem jeweils ein Temperatursensor 5,8 angeordnet ist. Insbesondere die beiden Temperatursensoren 5,8, jedes der beiden Sensorelemente 4,7 sollten in thermischem Kontakt mit dem Medium 3 stehen.

In diesem Beispiel ist das erste Sensorelement 4 als aktives Sensorelement ausgestaltet, dass es einen beheizbaren Temperatursensor 5 aufweist. Es versteht sich von selbst, dass ein Sensorelement 4 mit externem Heizelement, wie eingangs erwähnt, ebenfalls unter die vorliegende Erfindung fällt. Im Betrieb kann es entsprechend durch Zuführung einer Heizleistung P1 auf eine Temperatur T1 geheizt werden. Der Temperatursensor 8 des zweiten Sensorelements 7 ist dagegen nicht beheizbar und dient der Erfassung der Mediumstemperatur $T_M$.

Schließlich umfasst das thermische Durchflussmessgerät 1 noch eine Elektronikeinheit 9, welche der Signalerfassung, -auswertung und -speisung dient. Es sind im Laufe der Zeit sowohl thermische Durchflussmessgeräte 1 mit mehr als zwei Sensorelementen 4,7 bekannt geworden, als auch unterschiedlichste geometrische Ausgestaltungen und Anordnungen der jeweiligen Sensorelemente 4,7.

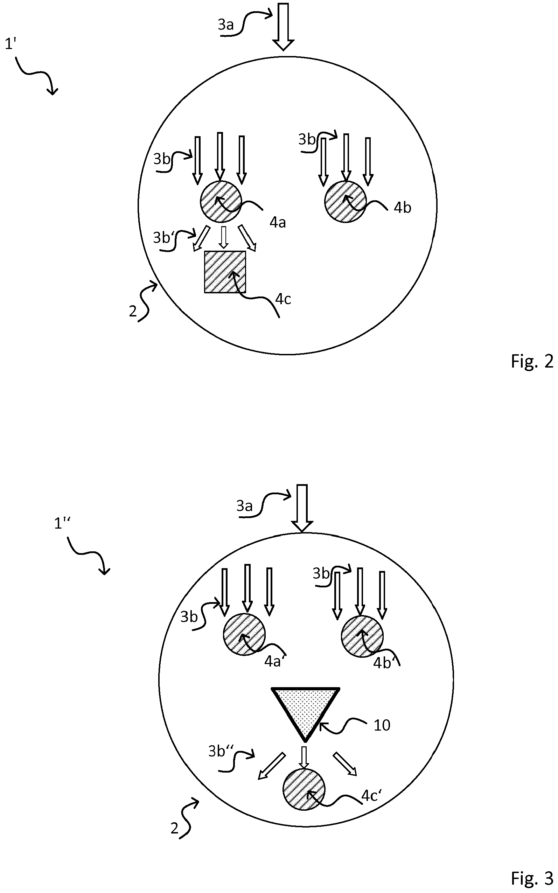

Beispielhaft sind in den Figuren Fig. 2 und Fig. 3 zwei mögliche Anordnungen bzw. Ausgestaltungen eines thermischen Durchflussmessgeräts 1 in einer zweidimensionalen Schnittdarstellung durch die Rohrleitung gezeigt. Die makroskopische Strömungsrichtung 3a des Mediums 3 ist durch einen Pfeil skizziert. Das thermische Durchflussmessgerät 1' gemäß Fig. 2 umfasst drei aktive Sensorelemente 4a,4b,4c mit jeweils einem beheizbaren Temperatursensor (nicht extra eingezeichnet). Das erste Sensorelement 4a und das zweite Sensorelement 4b weisen eine äquivalente geometrische Ausgestaltung mit einer kreisförmigen Querschnittsfläche auf, und sind an zwei in Bezug auf die es jeweils umgebende lokale Strömung äquivalenten Positionen 3b innerhalb der Rohrleitung 2 angeordnet. Das dritte Sensorelement 4c weist eine zweite von der ersten verschiedene geometrische Ausgestaltung mit einer quaderförmigen Querschnittsfläche auf. Darüber hinaus ist das dritte Sensorelement 4c an einer zweiten von der ersten in Bezug auf die das Sensorelement 4c lokal umgebende Strömung verschiedenen Position 3b' innerhalb der Rohrleitung 2 angeordnet. Die lokalen Strömungsprofile sind dabei jeweils durch Pfeile angedeutet.

In Fig. 3 ist ein weiteres thermisches Durchflussmessgerät 1" in einer zweidimensionalen Schnittdarstellung gezeigt. Das Medium 3 strömt in die gleiche Richtung 3a wie im Beispiel gemäß Fig. 2. Auch dieses thermische Durchflussmessgerät 1" umfasst drei aktive Sensorelemente 4a', 4b' und 4c'. Ähnlich wie in Fig. 2 sind das erste 4a' und das zweite 4b' Sensorelement symmetrisch auf gegenüberliegenden Seiten einer gedachten Achse parallel zur Rohrleitung angeordnet, während das dritte Sensorelement 4c' auf der gedachten Achse angeordnet ist, wobei zwischen der gedachten Verbindungslinie durch das erste 4a' und zweite 4b' Sensorelement und das dritte Sensorelement 4c' ein Staukörper angeordnet ist, dessen Abstand zum dritten Sensorelement 4c' geringer ist als derjenige zu der gedachten Verbindungslinie. Das erste Sensorelement 4a' und das zweite Sensorelement 4b' sind ferner äquivalent ausgestaltet. Der Staukörper 10 weist eine dreiecksförmige Querschnittsfläche auf. Es versteht sich jedoch von selbst, dass auch andere geometrische Ausgestaltungen für den Staukörper 10 möglich sind. Der Staukörper 10 beeinflusst das Strömungsprofil 3a, so dass sich eine gegenüber den die Sensorelemente 4a' und 4b' umgebenden lokalen Strömungen geänderte lokale Strömung 3b" für das dritte Sensorelement 4c' ergibt.

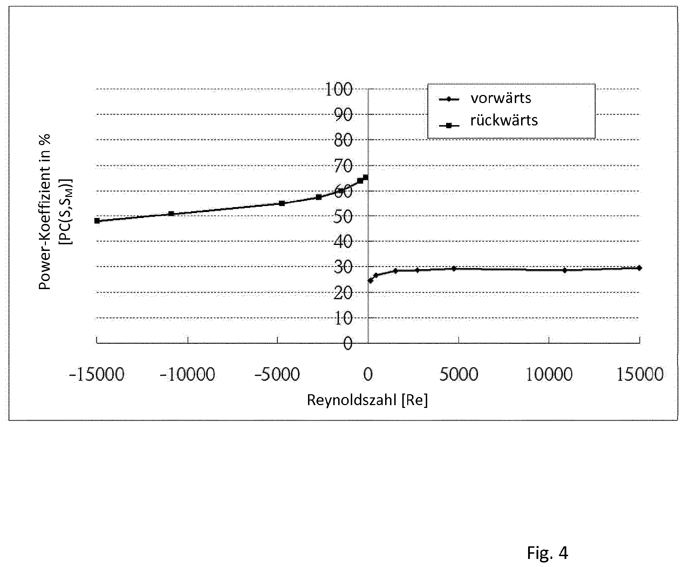

Unterschiedliche das jeweilige Sensorelement 4a,4b,4c, 4a',4b',4c' umgebende lokale Strömungen 3b,3b',3b" haben unterschiedliche Abkühlraten der jeweiligen beheizten Sensorelemente 4a,4b,4c, 4a',4b',4c'. Entsprechend unterscheiden sich die zur Bestimmung des Massedurchflusses und/oder der Strömungsrichtung heranzuziehenden Kennlinien oder funktionalen Bestimmungsgleichungen. Darüber hinaus unterscheiden sich aufgrund unterschiedlicher Anordnungen innerhalb der Rohrleitung 2 oder aufgrund unterschiedlicher geometrischer Ausgestaltung diese Kennlinien bzw. funktionalen Zusammenhänge ebenfalls für eine vorwärts- bzw. rückwärtsgerichtete Strömung 3a. Diese Unterschiede ermöglichen beispielsweise eine zuverlässige Richtungserkennung und entsprechend eine genauere Ermittlung des Massedurchflusses und/oder der Durchflussgeschwindigkeit. Beispielhaft ist deshalb in Fig. 4 eine Kennlinie des Power-Koeffizient eines kalibrierten beheizten Sensorelement S in Bezug auf ein passives, also nicht beheizte Sensorelement $S_M$ in Abhängigkeit von der Reynoldszahl Re für eine vorwärts gerichtete und für eine rückwärts gerichtete Strömung gezeigt. Im Umkehrpunkt für die Strömungsrichtung (Re=0) findet eine sprunghafte Änderung des Power-Koeffizienten statt. Darüber hinaus liegt der Powerkoeffizient für eine vorwärts gerichtete Strömung im Bereich von 20-30%, während der Power-Koeffizient für eine rückwärts gerichtete Strömung 50-60% beträgt. Entsprechend lässt sich anhand dieser Kennlinie die Strömungsrichtung exakt bestimmen, selbst wenn eine geringfügige Drift an einem Sensorelement auftritt.

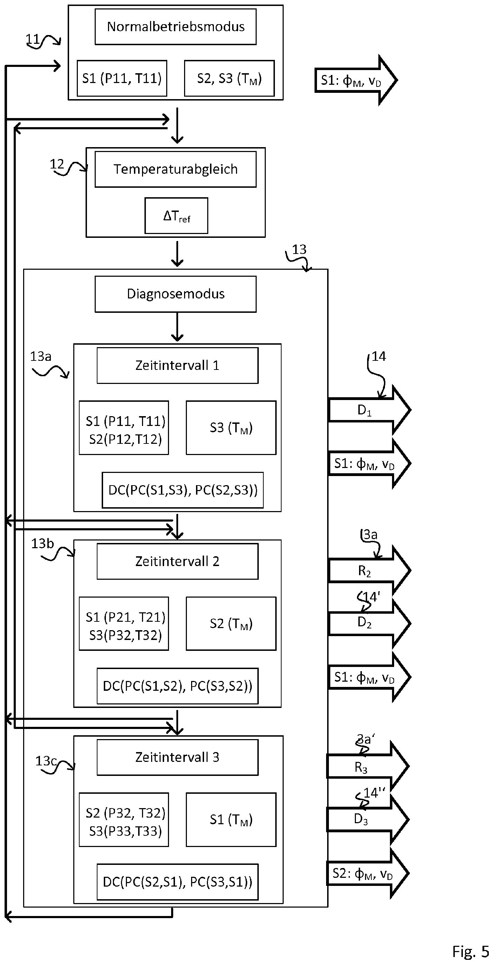

In Fig. 5 ist schließlich ein Blockschaltbild mit einem möglichen Verfahren zum Betreiben eines Durchflussmessgeräts 1 gezeigt. Der gezeigte Ablauf ist für das Beispiel eines Durchflussmessgeräts 1 mit drei Sensorelementen 4a,4b und 4c ausgelegt, insbesondere für ein Durchflussmessgerät 1" wie in Fig. 3 dargestellt. Vorteilhaft kann der Massedurchfluss bzw. die Durchflussgeschwindigkeit kontinuierlich und mit hoher Messgenauigkeit bestimmt werden. Zusätzlich lässt sich die Strömungsrichtung des Mediums innerhalb der Rohrleitung bestimmen und eine Aussage über den Zustand von zumindest einem der zumindest drei Sensorelemente treffen. Idealerweise kann sogar ermittelt werden, für welches der drei Sensorelemente 4a,4b,4c eine Änderung des thermischen Widerstands stattgefunden hat.

Im Folgenden wird der Einfachheit halber das erste Sensorelement, z. B. das in Fig. 3 mit 4a bezeichnete Sensorelement mit S1 bezeichnet, das zweite Sensorelement, z. B. 4b wird mit S2 bezeichnet und das dritte, z. B. 4c mit S3.

Im Normalbetriebsmodus 11 wird zumindest S1 durch Zuführung der Heizleistung P11 auf eine erste Temperatur T11 geheizt. S2 und S3 dagegen bleiben unbeheizt und dienen der Erfassung der Mediumstemperatur $T_M$. Es versteht sich von selbst, dass prinzipiell jedes der drei Sensorelemente S1, S2, S3 im Normalbetriebsmodus 11 beheizt werden kann, bzw. unbeheizt bleiben kann. Aus der Heizleistung P11, der Temperatur T11 des beheizten Sensorelements S1 sowie der Mediumstemperatur $T_M$ kann dann der Massedurchfluss $\Phi_M$ bzw. die Durchflussgeschwindigkeit $V_D$ bestimmt werden.

Bevor der sogenannte Diagnosemodus 13 aktiviert wird, kann optional ein Temperaturabgleich 12 durchgeführt werden. Dabei werden die Temperaturen der beiden unbeheizten Sensorelemente S2 und S3 verglichen. Im Falle, dass eine Abweichung $\Delta T_{2,3}$ der mittels der beiden Sensorelemente erhaltenen Messwerte für die Mediumstemperatur TM festgestellt wird, kann ein sogenannter Temperaturkorrekturterm ermittelt und auf alle folgenden Messungen angewendet werden, beispielsweise derart, dass T(S3) + $\Delta T_{kor,2,3}$=T(S2).

Im Diagnosemodus 13 sind nun verschiedene Möglichkeiten denkbar. Die Grundidee besteht darin, in unterschiedlichen Zeitintervallen jeweils zweien der drei Sensorelemente gleiche oder unterschiedliche Heizleistungen zuzuführen und eines der Sensorelemente unbeheizt zu lassen. Aus einem paarweisen Vergleich der Temperaturen und/oder Heizleistungen der beiden jeweils beheizten und der Temperatur des jeweils unbeheizten Sensorelements und/oder aus zumindest einer aus den Temperaturen und/oder Heizleistungen abgeleiteten Größe kann dann eine Aussage über den Zustand von zumindest einem der zumindest drei Sensorelemente getroffen und/oder eine Korrektur des Messwerts für den Massedurchfluss und/oder die Durchflussgeschwindigkeit durchgeführt und/oder eine Meldung über den Zustand von zumindest einem der zumindest drei Sensorelemente zu generiert und ausgegeben werden.

In dem in Fig. 5 gezeigten Blockschaltbild werden beispielwese in einem ersten Zeitintervall 13a S1 und S2 beheizt, während S3 unbeheizt bleibt. In einem zweiten (dritten) Zeitintervall 13b (13c) werden dann S1 und S3 (S2 und S3) geheizt, während wiederum S2 (S1) unbeheizt bleiben. Vor jedem Wechsel der jeweils beiden beheizten Sensorelemente kann erneut optional ein Temperaturabgleich 12 durchgeführt werden, und gegebenenfalls ein weiterer Temperaturkorrekturterm $\Delta T_{kor,1,2}$ oder $\Delta T_{kor,1,3}$ ermittelt werden. Diese Möglichkeit ist durch die jeweils unterschiedlichen Intervalle 13a, 13b und 13c und den Abschnitt für den Temperaturabgleich 12 verbindenden Pfeile angedeutet.

Eine Möglichkeit, eine Aussage über den Zustand von zumindest einem der zumindest drei Sensorelemente zu gewinnen, besteht in der Berechnung der jeweiligen Powerkoeffizienten PC(S1,S2), PC(S1,S3), PC(S2,S3), PC(S3,S2), PC(S3,S1) und/oder PC(S2,S1) und der jeweiligen Entscheidungskoeffizienten in jedem der Zeitintervalle 13a,13b,13c. Aus einem Vergleich der verschiedenen Entscheidungskoeffizienten wiederum lässt sich falls möglich ermitteln, für welches der drei Sensorelemente S1, S2, S3 sich der thermische Widerstand geändert hat. Je nach Größe der Änderung des thermischen Widerstandes für das jeweilige Sensorelement kann entweder, falls die Änderung nur geringfügig ist, eine Korrektur des jeweils ermittelten Messwerts für den Massedurchfluss $\Phi_M$ und/oder die Durchflussgeschwindigkeit $V_D$ vorgenommen werden. Ist jedoch die Änderung größer als ein vorgebbarer Grenzwert, so wird eine Meldung über den Zustand des jeweiligen Sensorelements S1,S2,S3 oder darüber dass sich der thermische Widerstand für zumindest eines der zumindest drei Sensorelemente S1, S2, S3 geändert hat, generiert und ausgegeben. Im Falle, dass bekannt ist, an welchem der zumindest drei Sensorelemente S1,S2,S3 eine Änderung des thermischen Widerstands stattgefunden hat, kann der Messbetrieb entsprechend dem Normalbetriebsmodus 11 auch mit den verbleibenden zwei funktionsfähigen Sensorelementen durchgeführt werden, bis zu dem Zeitpunkt, an welchem das gedriftete Sensorelement gewartet wird.

Je nach Konfiguration müssen nicht alle drei Zeitintervalle 13a, 13b, 13c durchgeführt werden, weil beispielsweise entweder an keinem der Sensorelemente S1,S2,S3 eine Änderung des thermischen Widerstandes festgestellt wird, oder bereits nach dem ersten oder zweiten Zeitintervall festgestellt werden kann, für welches der Sensorelemente S1 ,S2,S3 eine Änderung des thermischen Widerstands aufgetreten ist.

Sofern alle drei Zeitintervalle 13a,13b und 13c durchlaufen werden, so werden drei verschiedene Diagnoseinformationen 14,14',14" (D1, D2 und D3) ermittelt, welche sich aus einem Vergleich der in jedem der Zeitintervalle 13a,13b und 13c ermittelbaren Power-Koeffizienten, beispielsweise anhand der jeweiligen Entscheidungskoeffizienten ergeben. Durch einen Vergleich der drei Diagnoseinformationen 14 D1, D2 und D3 kann dann gegebenenfalls ermittelt werden, für welches der drei Sensorelemente S1, S2 oder S3 sich der thermische Widerstand geändert hat.

In dem hier gezeigten Beispiel wird ferner im zweiten 13b und dritten 13c Zeitintervall des Diagnosemodus 13 eine Richtungserkennung 3a durchgeführt. Da das hier gezeigte Ablaufdiagramm auf einen Sensor gemäß der Fig. 3 zugeschnitten ist, ist die S3 lokal umgebende Strömung 3b" von den S1 und S2 jeweils lokal umgebenden Strömungen 3a verschieden, so dass eine Richtungserkennung 3a genau dann am effektivsten vollzogen werden kann, wenn es sich bei einem der jeweils zwei beheizten Sensorelemente um S1 oder S2 und beim zweiten beheizten Sensorelement um S3 handelt.

Im dritten Zeitintervall 13c werden S2 und S3 beheizt. Entsprechend sollte für eine kontinuierliche Bestimmung des Massedurchflusses $\Phi_M$ und/oder der Durchflussgeschwindigkeit $v_D$ zumindest für dieses Zeitintervall von S1 auf S2 gewechselt werden. Vor dem Wechsel bietet sich daher insbesondere ein Temperaturabgleich 12 an. Ähnliches gilt im Falle, dass eine Änderung des thermischen Widerstands von S3 festgestellt wird. Der Kunde sollte aber gegebenenfalls mittels einer Meldung darüber informiert werden, dass eine Wartung des thermischen Durchflussmessgeräts 1 notwendig wird.

Ergibt sich aus dem Diagnosemodus 13, dass der thermische Widerstand von S1 sich geändert hat, so kann für den Normalmodus 11 von S1 auf S2 umgeschaltet werden, so dass weiterhin eine korrekte und genaue Bestimmung des Massedurchflusses $\Phi_M$ und/oder der Durchflussgeschwindigkeit $v_D$ gewährleistet ist.

Je nach Wunsch des Kunden kann entweder der Diagnosemodus 13 und/oder die Richtungserkennung 3a nur auf Bedarf aktiviert werden. Es ist jedoch ebenfalls möglich, den Diagnosemodus 13 und/oder eine Richtungserkennung 3a kontinuierlich und parallel zur Bestimmung des Massedurchflusses $\Phi_M$ und/oder der Durchflussgeschwindigkeit $V_D$ durchzuführen. Die Richtungserkennung 3a wird z. B. in Fig. 5 wiederholend in den Zeitintervallen 13b und 13c durchgeführt und die jeweils gewonnenen Aussagen über die Strömungsrichtung $R_2$ und $R_3$ können beispielsweise zur Überprüfung des Messergebnisses miteinander verglichen werden. Durch einen Vergleich zweier an äquivalenten Positionen angeordneten und gleichartig ausgestalteten Sensorelementen kann normalerweise keine genaue Richtungserkennung vorgenommen werden.

Zur Auswertung der in den verschiedenen Zeitintervallen 13a,13b und 13c des Diagnosemodus 13 gewonnenen Diagnoseinformationen D1, D2 und D3 kann angenommen werden, dass eine Verschmutzung und/oder Belagsbildung an zumindest einem der drei Sensorelemente eine negative Verschiebung des jeweiligen Power-Koeffizienten gegenüber dem Normalzustand zur Folge hat, während das Auftreten einer Abrasion zu einer positiven Verschiebung führt.

Wird eine andere als das in Fig. 5 gezeigte Diagramm herangezogene Anordnung und/oder Ausgestaltung des thermischen Durchflussmessgeräts gewählt, sind die einzelnen Schritte gegebenenfalls geringfügig abzuändern. Unabhängig von der Anzahl der Sensorelemente sowie deren Anordnung und/oder Ausgestaltung bleibt der grundlegende Ablauf des Abwechselns zwischen einem Normalmodus 12 und einem Diagnosemodus 13 bestehen. Ebenfalls bleibt die Möglichkeit, optional einen Temperaturabgleich 12 und/oder eine Richtungserkennung 3a durchzuführen, bestehen. Außerdem beruht jedes erfindungsgemäße Verfahren auf einem paarweisen Vergleich der Temperaturen und/oder Heizleistungen zweier jeweils beheizter Sensorelemente und der Temperatur eines dritten nicht beheizten Sensorelements und/oder aus zumindest einer aus den Temperaturen und/oder Heizleistungen abgeleiteten Größe. Dabei können in unterschiedlichen Zeitintervallen jeweils unterschiedliche Sensorelemente geheizt werden.

**Bezugszeichenliste**

| | |
|---|---|
| 1 | Thermisches Durchflussmessgerät |
| 2 | Rohrleitung, bzw. Messrohr |
| 3 | Medium |
| 3a | makroskopische Strömungsrichtung |
| 3b | lokale ein Sensorelement umgebende Strömung |
| 4 | aktives Sensorelement |
| 4a,4b,4c | unterschiedliche Anordnungen/Ausgestaltungen eines aktiven Sensorelements |
| 5 | beheizbarer Temperatursensor |
| 5a,5b,5c | beheizbarer Temperatursensor der Sensorelemente 4a,4b,4c |
| 6,6a | Gehäuse |
| 7 | passives Sensorelement |
| 8 | Temperatursensor |
| 9 | Elektronikeinheit |

| 10 | Staukörper |
| 11 | Normalbetriebsmodus |
| 12 | Temperaturabgleich |
| 13 | Diagnosemodus |
| 13a,13b,13c | erstes, zweites, drittes Zeitintervall des Diagnosemodus |
| 14 | Diagnose Information |
| S1 | erstes Sensorelement, z.B. 4a |
| S2 | zweites Sensorelement, z. B. 4b |
| S3 | drittes Sensorelement, z. B. 4c |
| Pxx | dem Sensorelment Sx im Zeitintervall y zugeführte Heizleistung |
| Txy | Temperatur des Sensorelements Sx im Zeitintervall y |
| PC | Power-Koeffizient |
| DC | Entscheidungskoeffizient |
| $D_1,D_2,D_3$ | Diagnoseinformationen |
| $R_2 R_3$ | Strömungsrichtung des Mediums# |
| $\Phi_M$ | Massedurchfluss |
| $v_D$ | Durchflussgeschwindigkeit |
| $T_M$ | Mediumstemperatur |
| $\Delta T_{kor,x,y}$ | Temperaturkorrekturterm für den Abgleich zwischen Sensorelement x und y |

**Patentansprüche**

1.  Thermisches Durchflussmessgerät (1) zur Bestimmung und/oder Überwachung des Massedurchflusses ($\Phi_M$) und/oder der Durchflussgeschwindigkeit ($v_D$) eines strömungsfähigen Mediums (3) durch eine Rohrleitung (2) mit zumindest drei Sensorelementen (4a,4b,4c) und einer Elektronikeinheit (9), wobei jedes der zumindest drei Sensorelemente (4a,4b,4c)

    - zumindest teilweise und/oder zeitweise mit dem Medium (3) in thermischem Kontakt steht, und
    - einen beheizbaren Temperatursensor (5a,5b,5c) umfasst, und wobei die Elektronikeinheit (9) dazu ausgestaltet ist,
    - jedes der drei Sensorelemente (4a,4b,4c) mit einer Heizleistung (P1,P2,P3) zu heizen,
    - dessen Temperatur (T1,T2,T3) zu erfassen, und
    - zumindest zwei der zumindest drei Sensorelemente (4a,4b,4c) gleichzeitig zu heizen,
    - kontinuierlich den Massedurchfluss ($\Phi_M$) und/oder die Durchflussgeschwindigkeit ($v_D$) des Mediums (3) zu ermitteln, und gleichzeitig
    - eine Aussage über den Zustand ($D_1,D_2,D_3$) von zumindest einem der zumindest drei Sensorelemente (4a,4b,4c) zu treffen, und im Falle dass eine Fehlfunktion und/oder eine Belagsbildung an zumindest einem der zumindest drei Sensorelemente (4a,4b,4c) auftritt, eine Korrektur des Messwerts für den Massedurchfluss ($\Phi_M$) und/oder die Durchflussgeschwindigkeit ($v_D$) durchzuführen und/oder eine Meldung über den Zustand des zumindest einen Sensorelements (4a,4b,4c) zu generieren und auszugeben.

2.  Thermisches Durchflussmessgerät nach Anspruch 1, wobei die Elektronikeinheit (9) dazu ausgestaltet ist, die Strömungsrichtung (3a) des strömungsfähigen Mediums (3) zu bestimmen.

3.  Thermisches Durchflussmessgerät nach Anspruch 1 oder 2, wobei die Elektronikeinheit (9) dazu ausgestaltet ist, unterbrechungslos den Massedurchfluss ($\Phi_M$) und/oder die Durchflussgeschwindigkeit ($v_D$) zu ermitteln, die Strömungsrichtung (3a) des Mediums (3) zu bestimmen und/oder eine Aussage über den Zustand ($D_1,D_2,D_3$) von zumindest einem der zumindest drei Sensorelemente (4a,4b,4c) zu treffen.

4.  Thermisches Durchflussmessgerät nach Anspruch 1, wobei zumindest eines der zumindest drei Sensorelemente (4a,4b,4c) eine erste Ausgestaltung (4a,4b), bezogen auf die Geometrie, Aufbau und Material, aufweist, und zumindest ein zweites der zumindest drei Sensorelemente (4a,4b,4c) eine zweite von der ersten verschiedene Ausgestaltung (4c) aufweist.

5.  Thermisches Durchflussmessgerät nach Anspruch 1 oder 2, wobei zumindest zwei (4a,4b) der zumindest drei Sensorelemente (4a,4b,4c) an in Bezug auf die es jeweils lokal umgebende Strömung (3a) des Mediums (3) zwei ersten äquivalenten Positionen innerhalb der Rohrleitung (2) angeordnet sind, und wobei zumindest eines (4c) der zumindest drei Sensorelemente (4a,4b,4c) an einer in Bezug auf die es lokal umgebende Strömung (3b) des Mediums (3) zweiten von der ersten verschiedenen Positionen innerhalb der Rohrleitung (2) angeordnet ist.

6.  Thermisches Durchflussmessgerät nach zumindest einem der vorhergehenden Ansprüche, wobei zumindest eines (4c) der zumindest drei Sensorelemente (4a,4b,4c) in Bezug auf die Längsachse durch die Rohrleitung in unmittelbarer Umgebung vor oder hinter einem Staukörper (10), oder einem anderen strömungsbeeinflussenden Modul, angeordnet ist, derart, dass das lokale das jeweilige Sensorelement (4a,4b,4c) umgebende Strömungsprofil durch den Staukörper (10) gezielt verändert wird.

7. Thermisches Durchflussmessgerät nach Anspruch 6, wobei die Querschnittsfläche des Staukörpers (10) ein Dreieck, ein Rechteck, ein Parallelogramm, ein Trapez, ein Kreis oder ein Ellipse ist.

8. Thermisches Durchflussmessgerät nach zumindest einem der vorhergehenden Ansprüche, mit genau drei Sensorelementen (4a,4b,4c), wobei zumindest eines der drei Sensorelemente (4c) in unmittelbarer Umgebung eines Staukörpers (10), oder eines anderen strömungsbeeinflussenden Moduls, angeordnet ist derart, dass das lokale das jeweilige Sensorelement (4a,4b,4c) umgebende Strömungsprofil durch den Staukörper (10) gezielt verändert wird.

9. Thermisches Durchflussmessgerät nach Anspruch 8, wobei das erste (4a, S1) und das zweite Sensorelement (4b, S2) symmetrisch auf gegenüberliegenden Seiten einer gedachten Achse parallel zur Rohrleitung (2) angeordnet sind, wobei das dritte Sensorelement (4c, S3) auf der gedachten Achse angeordnet ist, und wobei zwischen der gedachten Verbindungslinie durch das erste (4a,S1) und das zweite Sensorelement (4b,S2) und dem dritten Sensorelement (4c, S3) ein Staukörper (10) angeordnet ist, dessen Abstand zum dritten Sensorelement (4c,S3) geringer ist als derjenige zu der gedachten Verbindungslinie.

10. Verfahren zum Betreiben eines thermischen Durchflussmessgeräts (1) zur Bestimmung und/oder Überwachung des Massedurchflusses ($\Phi_M$) und/oder der Durchflussgeschwindigkeit ($v_D$) eines strömungsfähigen Mediums (3) durch eine Rohrleitung (2) mit zumindest drei Sensorelementen (S1,S2,S3) und einer Elektronikeinheit (9) nach zumindest einem der vorhergehenden Ansprüche, in einem Normalbetriebsmodus (11) und in einem Diagnosemodus (13),

wobei im Normalbetriebsmodus (11) zumindest eines (S1) der zumindest drei Sensorelemente (S1,S2,S3) mit einer einstellbaren (P1) Heizleistung beheizt, und dessen Temperatur (T1) erfasst wird, und der Massedurchflusses ($\Phi_M$) und/oder der Durchflussgeschwindigkeit ($v_D$) des Mediums (3) bestimmt wird, und wobei im Diagnosemodus (13) zumindest folgende Ablaufschritte durchgeführt werden:

- ein erstes Sensorelement (S1) wird mit einer ersten Heizleistung (P11) beheizt und dessen Temperatur (T11) erfasst, - ein zweites Sensorelement (S2) wird mit einer zweiten Heizleistung (P12) beheizt und dessen Temperatur (T12) erfasst, - die Temperatur des Mediums ($T_M$) wird mittels eines nicht beheizten dritten Sensorelements (S3) erfasst, - aus der Heizleistung (P11, P12) und/oder Temperatur (T11,T12) des ersten (S1) oder zweiten (S2) Sensorelements und/oder zumindest einer aus zumindest einer dieser Größen abgeleiteten Größe wird kontinuierlich der Massedurchflusses ($\Phi_M$) und/oder der Durchflussgeschwindigkeit ($v_D$) des Mediums (3) bestimmt, und gleichzeitig - aus einem paarweisen Vergleich der Temperaturen (T11,T12,...) und/oder Heizleistungen (P11, P12,...) des ersten (S1) und/oder zweiten (S2) Sensorelements und der Temperatur ($T_M$) des dritten Sensorelements (S3) und/oder aus zumindest einer aus den Temperaturen (T11,T12,...) und/oder Heizleistungen (P11, P12,...) abgeleiteten Größe wird eine Aussage über den Zustand ($D_1,D_2,D_3$) von zumindest einem der zumindest drei Sensorelemente (S1,S2,S3) getroffen und/oder eine Korrektur des Messwerts für den Massedurchflusses ($\Phi_M$) und/oder der Durchflussgeschwindigkeit ($v_D$) durchgeführt und/oder eine Meldung über den Zustand ($D_1,D_2,D_3$) von zumindest einem der zumindest drei Sensorelemente (S1,S2,S3) generiert und ausgegeben.

11. Verfahren nach Anspruch 10, wobei aus einem paarweisen Vergleich der Temperaturen (T11,T12,...) und/oder Heizleistungen (P11, P12,...) und/oder aus zumindest einer aus den Temperaturen(T11,T12,...) und/oder Heizleistungen (P11, P12,...) abgeleiteten Größe die Strömungsrichtung (3a) des Mediums ermittelt (3) wird.

12. Verfahren nach Anspruch 10 oder 11, wobei der Massedurchflusses ($\Phi_M$) die Durchflussgeschwindigkeit ($v_D$), die Strömungsrichtung (3a) des Mediums (3) und/oder eine Aussage über den Zustand ($D_1,D_2,D_3$) von zumindest einem der zumindest drei Sensorelemente (S1,S2,S3) unterbrechungslos und zeitgleich ermittelt werden.

13. Verfahren nach zumindest einem der Ansprüche 10-12, wobei vor dem gleichzeitigen Heizen von zumindest zwei der zumindest drei Sensorelemente (S1,S2,S3) mit einer einstellbaren Heizleistung (P1, P2,P3) ein Abgleich (12) der gemessenen Mediumstemperaturen (T1,T2,T3) vorgenommen wird, und gegebenenfalls ein Temperaturkorrekturterm ($\Delta T_{kor,1,2}$, $\Delta T_{kor,1,3}$,

$\Delta T_{kor,2,3}$) errechnet und auf alle folgenden Messungen angewendet wird.

14. Verfahren nach zumindest einem der Ansprüche 10-13 wobei ein Vergleich der Power-Koeffizienten PC der zumindest drei Sensorelemente (S1,S2,S3) durchgeführt wird.

15. Verfahren nach zumindest einem der Ansprüche 10-14,

wobei das Durchflussmessgerät (1) genau drei Sensorelemente (S1,S2,S3) aufweist, umfassend folgende Verfahrensschritte:

im Normalbetriebsmodus (11) wird dem ersten Sensorelement (S1) eine erste Heizleistung (P11) beheizt, dessen Temperatur (T11) erfasst, und der Massedurchflusses ($\Phi_M$) und/oder der Durchflussgeschwindigkeit ($v_D$) bestimmt, in einem ersten Zeitintervall (13a) des Diagnosemodus (13) werden

- das erste (S1) und das zweite Sensorelement (S2) beheizt,
- der Massedurchflusses ($\Phi_M$) und/oder der Durchflussgeschwindigkeit ($v_D$) anhand des ersten Sensorelements (S1) bestimmt, und
- ein Vergleich der Power-Koeffizienten PC(S1,S3) und PC(S2,S3) durchgeführt,

in einem zweiten Zeitintervall (13b) des Diagnosemodus (13) werden

- das erste (S1) und das dritte (S3) Sensorelement beheizt,
- der Massedurchflusses ($\Phi_M$) und/oder der Durchflussgeschwindigkeit ($v_D$) anhand des ersten (S1) Sensorelements bestimmt, und
- ein Vergleich der Power-Koeffizienten PC(S1,S2) und PC(S3,S2) durchgeführt, und daraus die Richtung (3a, $R_2$) des strömenden Mediums (3) ermittelt, und

in einem dritten Zeitintervall (13c) des Diagnosemodus (13) werden

- das zweite (S2) und das dritte (S3) Sensorelement beheizt,
- der Massedurchflusses ($\Phi_M$) und/oder der Durchflussgeschwindigkeit ($v_D$) anhand des zweiten (S2) Sensorelements bestimmt, und

- ein Vergleich der Power-Koeffizienten PC(S2,S1) und PC(S3,S1) durchgeführt, und daraus die Richtung (3a,$R_3$) des strömenden Mediums (3) ermittelt,

wobei anhand der Vergleiche der Power-Koeffizienten (PC(S1,S2), PC(S1,S3), PC(S2,S1), PC(S2,S3),PC(S3,S1), PC(S3,S3)) in den drei Zeitintervallen (13a, 13b, 13c) eine Aussage über den Zustand ($D_1,D_2,D_3$) von zumindest einem der zumindest drei Sensorelemente (S1,S2,S3) getroffen wird und eine Korrektur des Messwerts für den Massedurchflusses ($\Phi_M$) und/oder der Durchflussgeschwindigkeit ($v_D$) durchgeführt und/oder eine Meldung über den Zustand ($D_1,D_2,D_3$) des zumindest einen Sensorelements (S1,S2,S3) generiert und ausgegeben wird.

## Claims

1. Thermal flowmeter (1) designed to determine and/or monitor the mass flow ($\Phi_M$) and/or flow velocity ($v_D$) of a medium (3) capable of flowing through a pipe (2) with at least three sensor elements (4a, 4b, 4c) and an electronics unit (9), wherein each of the at least three sensor elements (4a, 4b, 4c)

- is at least partially and/or temporarily in thermal contact with the medium (3), and
- comprises a heatable temperature sensor (5a, 5b, 5c), and wherein said electronics unit (9) is designed to
- heat each of the three sensor elements (4a, 4b, 4c) with a heating power (P1, P2, P3),
- measure their temperature (T1, T2, T3), and
- simultaneously heat at least two of the at least three sensor elements (4a, 4b, 4c),
- continuously determine the mass flow ($\Phi_M$) and/or the flow velocity ($v_D$) of the medium (3), and, at the same time,
- provide information on the state (D1, D2, D3) of at least one of the at least three sensor elements (4a, 4b, 4c) and, in the event that a malfunction and/or the formation of buildup occurs at at least one of the at least three sensor elements (4a, 4b, 4c), to correct the measured value for the mass flow ($\Phi_M$) and/or flow velocity ($v_D$) and/or to generate and output a message on the state of the at least one sensor element (4a, 4b, 4c).

2. Thermal flowmeter as claimed in Claim 1, wherein the electronics unit (9) is designed to determine the flow direction (3a) of the medium (3) which

3. Thermal flowmeter as claimed in Claim 1 or 2, wherein the electronics unit (9) is designed to determine, without interruption, the mass flow ($\Phi_M$) and/or the flow velocity ($v_D$), to determine the flow direction (3a) of the medium (3) and/or to provide information on the state ($D_1$, $D_2$, $D_3$) of at least one of the at least three sensor elements (4a, 4b, 4c).

4. Thermal flowmeter as claimed in Claim 1, wherein at least one of the at least three sensor elements (4a, 4b, 4c) has a first design (4a, 4b), in terms of geometry, structure and material, and at least a second of the at least three sensor elements (4a, 4b, 4c) has a second design (4c) which is different to the first design.

5. Thermal flowmeter as claimed in Claim 1 or 2, wherein at least two (4a, 4b) of the at least three sensor elements (4a, 4b, 4c) are arranged at two first equivalent positions inside the pipe (2) in relation to the flow (3a) of the medium (3) surrounding them locally, and wherein at least one (4c) of the at least three sensor elements (4a, 4b, 4c) is arranged inside the pipe (2) at a second position which is different to the first in relation to the flow (3b) of the medium (3) surrounding it locally.

6. Thermal flowmeter as claimed in one of the previous claims, wherein at least one (4c) of the at least three sensor elements (4a, 4b, 4c) is arranged - in relation to the longitudinal axis through the pipe - in the immediate vicinity upstream or downstream from a bluff body (10), or another module influencing the flow, in such a way that the flow profile local surrounding the sensor element (4a, 4b, 4c) is modified by the bluff body (10) in a targeted manner.

7. Thermal flowmeter as claimed in Claim 6, wherein the cross-sectional area of the bluff body (10) is a triangle, a rectangle, a parallelogram, a trapezoid, a circle or an ellipsis.

8. Thermal flowmeter as claimed in at least one of the previous claims, with precisely three sensor elements (4a, 4b, 4c), wherein at least one of the three sensor elements (4c) is arranged in the immediate vicinity of a bluff body (10), or another module influencing the flow, in such a way that the flow profile locally surrounding the sensor element (4a, 4b, 4c) is modified by the bluff body (10) in a targeted manner.

9. Thermal flowmeter as claimed in Claim 8, wherein the first (4a, S1) and the second sensor element (4b, S2) are arranged symmetrically on opposite sides of an imaginary axis parallel to the pipe (2), wherein the third sensor element (4c, S3) is arranged on the imaginary axis, and wherein a bluff body (10) is arranged between the imaginary connecting line through the first (4a, S1) and the second (4b, S2) sensor element and the third sensor element (4c, S3), wherein the distance of said bluff body to the third sensor element (4c, S3) is less than the distance to the imaginary connecting line.

10. Procedure to operate a thermal flowmeter (1) designed to determine and/or monitor the mass flow ($\Phi_M$) and/or flow velocity ($v_D$) of a medium (3) flowing through a pipe (2), with at least three sensor elements (S1, S2, S3) and an electronics unit (9) as claimed in at least one of the previous claims, in a normal operating mode (11) and in a diagnostic mode (13),

wherein, in the normal operating mode (11), at least one (S1) of the at least three sensor elements (S1, S2, S3) is heated with a controllable heating power (P1) and its temperature (T1) is measured, and the mass flow ($\Phi_M$) and/or the flow velocity ($v_D$) of the medium (3) is determined, and

wherein, in the diagnostic mode (13), at least the following procedural steps are performed:

- a first sensor element (S1) is heated with a first heating power (P11) and its temperature (T11) is measured,
- a second sensor element (S2) is heated with a second heating power (P12) and its temperature (T12) is measured,
- the temperature of the medium ($T_M$) is measured by means of a non-heated third sensor element (S3),
- the mass flow ($\Phi_M$) and/or the flow velocity ($v_D$) of the medium (3) is continuously determined from the heating power (P11, P12) and/or the temperature (T11, T12) of the first (S1) or the second (S2) sensor element and/or at least one variable derived from at least one of these variables, and simultaneously
- information about the state ($D_1$, $D_2$, $D_3$) of at least one of the at least three sensor elements (S1, S2, S3) is provided and/or the measured value for the mass flow ($\Phi_M$) and/or the flow velocity ($v_D$) is corrected and/or a message about the state ($D_1$, $D_2$, $D_3$) of at least one of the at least three sensor elements (S1, S2, S3) is generated and output from a pair-based comparison of temperatures (T11, T12, ...) and/or heating powers (P11, P12, ...) of the first (S1) and/or of the second (S2) sensor element and the temperature ($T_M$) of the third sensor element (S3) and/or from at least a variable derived from the temperatures (T11, T12, ... ) and/or the heating powers (P11, P12, ...).

11. Procedure as claimed in Claim 10, wherein the flow direction (3a) of the medium (3) is determined from a pair-based comparison of the temperatures (T11, T12, ...) and/or the heating powers (P11, P12, ...) and/or from at least one variable derived from the temperatures (T11, T12, ...) and/or the heating powers (P11, P12, ...).

12. Procedure as claimed in Claim 10 or 11, wherein the mass flow ($\Phi_M$), the flow velocity ($v_D$), the flow direction (3a) of the medium (3) and/or information on the state ($D_1$, $D_2$, $D_3$) of at least one of the at least three sensor elements (S1, S2, S3) are determined without interruption and simultaneously.

13. Procedure as claimed in at least one of the Claims 10 to 12, wherein, before simultaneously heating at least two of the at least three sensor elements (S1, S2, S3) with a controllable heating power (P1, P2, P3), the measured medium temperatures (T1, T2, T3) are reconciled (12) and, where applicable, a temperature correction term ($\Delta T_{kor,1,2}$, $\Delta T_{kor,1,3}$, $\Delta T_{kor,2,3}$) is calculated and applied to all the subsequent measurements.

14. Procedure as claimed in at least one of the Claims 10 to 13, wherein the power coefficients PC of the at least three sensor elements (S1, S2, S3) are compared.

15. Procedure as claimed in at least one of the Claims 10 to 14, wherein the flowmeter (1) has precisely three sensor elements (S1, S2, S3),
wherein said procedure comprises the following steps:

in the normal operating mode (11), the first sensor element (S1) is heated by a first heating power (P11), the temperature of said sensor element is measured, and the mass flow ($\Phi_M$) and/or the flow velocity ($v_D$) is/are determined,
in a first time interval (13a) of the diagnostic mode (13),

- the first (S1) and the second sensor element (S2) are heated,

- the mass flow ($\Phi_M$) and/or the flow velocity ($v_D$) are determined using the first sensor element (S1), and
- the power coefficients PC(S1,S3) and PC(S2,S3) are compared in a second time interval (13b) of the diagnostic mode (13),
- the first (S1) and the third (S3) sensor elements are heated,
- the mass flow ($\Phi_M$) and/or the flow velocity ($v_D$) is/are determined using the first (S1) sensor element, and
- the power coefficients PC(S1,S2) and PC(S3,S2) are compared and this information is used to determine the direction (3a, $R_2$) of the flowing medium (3), and

in a third time interval (13c) of the diagnostic mode (13),

- the second (S2) and the third (S3) sensor elements are heated
- the mass flow ($\Phi_M$) and/or the flow velocity ($v_D$) is/are determined using the second (S2) sensor element, and
- the power coefficients PC(S2,S1) et PC(S3,S1) are compared and this information is used to determine the direction (3a, $R_3$) of the flowing medium (3),

wherein, on the basis of the comparison of the power coefficients PC(S1,S2), PC(S1,S3), PC(S2,S1), PC(S2,S3), PC(S3,S1), PC(S3,S3) in the three time intervals (13a, 13b, 13c), information on the state ($D_1$, $D_2$, $D_3$) of at least one of the at least three sensor elements (S1, S2, S3) is provided and the measured value for the mass flow ($\Phi_M$) and/or the flow velocity ($v_D$) is corrected and/or a message on the state ($D_1$, $D_2$, $D_3$) of the at least one sensor element (S1, S2, S3) is generated and output.

**Revendications**

1. Débitmètre thermique (1) destiné à la détermination et/ou à la surveillance du débit massique ($\Phi_M$) et/ou de la vitesse d'écoulement ($v_D$) d'un produit (3) apte à s'écouler à travers une conduite (2)
avec au moins trois éléments capteurs (4a, 4b, 4c) et une unité électronique (9), chacun des au moins trois éléments capteurs (4a, 4b, 4c)

- étant au moins partiellement et/ou temporairement en contact thermique avec le produit (3), et
- comprenant un capteur de température (5a, 5b, 5c) pouvant être chauffé, et laquelle unité électronique (9) est conçue pour

- chauffer chacun des trois éléments capteurs (4a, 4b, 4c) avec une puissance de chauffage (P1, P2, P3),
- mesurer leur température (T1, T2, T3), et
- chauffer simultanément au moins deux des au moins trois éléments capteurs (4a, 4b, 4c),
- déterminer en continu le débit massique ($\Phi_M$) et/ou la vitesse d'écoulement ($v_D$) du produit (3), et, en même temps,
- obtenir une information sur l'état (D1, D2, D3) d'au moins l'un des au moins trois éléments capteurs (4a, 4b, 4c) et, dans le cas où un dysfonctionnement et/ou une formation de dépôt se produit sur au moins l'un des au moins trois éléments capteurs (4a, 4b, 4c), pour effectuer une correction de la valeur mesurée pour le débit massique ($\Phi_M$) et/ou la vitesse d'écoulement ($v_D$) et/ou pour générer et émettre un message sur l'état de l'au moins un élément capteur (4a, 4b, 4c).

2. Débitmètre thermique selon la revendication 1, pour lequel l'unité électronique (9) est conçue pour déterminer le sens d'écoulement (3a) du produit (3) apte à s'écouler.

3. Débitmètre thermique selon la revendication 1 ou 2, pour lequel l'unité électronique (9) est conçue pour déterminer sans interruption le débit massique ($\Phi_M$) et/ou la vitesse d'écoulement ($v_D$), pour déterminer le sens d'écoulement (3a) du produit (3) et/ou pour obtenir une information sur l'état ($D_1$, $D_2$, $D_3$) d'au moins l'un des au moins trois éléments capteurs (4a, 4b, 4c).

4. Débitmètre thermique selon la revendication 1, pour lequel au moins l'un des au moins trois éléments capteurs (4a, 4b, 4c) présente une première configuration (4a, 4b), en termes de géométrie, de structure et de matériau, et au moins un deuxième des au moins trois éléments capteurs (4a, 4b, 4c) présente une deuxième configuration (4c) différente de la première.

5. Débitmètre thermique selon la revendication 1 ou 2, pour lequel au moins deux (4a, 4b) des au moins trois éléments capteurs (4a, 4b, 4c) sont disposés à deux premières positions équivalentes à l'intérieur de la conduite (2) par rapport à l'écoulement (3a) du produit (3) qui les entoure respectivement localement, et pour lequel au moins l'un (4c) des au moins trois éléments capteurs (4a, 4b, 4c) est disposé à l'intérieur de la conduite (2) à une deuxième position différente de la première par rapport à l'écoulement (3b) du produit (3) qui l'entoure localement.

6. Débitmètre thermique selon l'une des revendications précédentes, pour lequel au moins l'un (4c) des au moins trois éléments capteurs (4a, 4b, 4c) est disposé, par rapport à l'axe longitudinal, à travers la conduite dans l'environnement immédiat en amont ou en aval d'un corps de retenue (10), ou d'un autre module influençant l'écoulement, de telle sorte que le profil d'écoulement local entourant l'élément capteur (4a, 4b, 4c) respectif est modifié de manière ciblée par le corps de retenue (10)

7. Débitmètre thermique selon la revendication 6, pour lequel la surface de la section transversale du corps de retenue (10) est un triangle, un rectangle, un parallélogramme, un trapèze, un cercle ou une ellipse.

8. Débitmètre thermique selon l'une des revendications précédentes, avec exactement trois éléments capteurs (4a, 4b, 4c), au moins l'un des trois éléments capteurs (4c) étant disposé dans l'environnement immédiat d'un corps de retenue (10), ou d'un autre module influençant l'écoulement, de telle sorte que le profil d'écoulement local entourant l'élément capteur (4a, 4b, 4c) respectif est modifié de manière ciblée par le corps de retenue (10).

9. Débitmètre thermique selon la revendication 8,

pour lequel le premier (4a, S1) et le deuxième élément capteur (4b, S2) sont disposés symétriquement sur des côtés opposés d'un axe imaginaire parallèle à la conduite (2), le troisième élément capteur (4c, S3) étant disposé sur l'axe imaginaire, et

pour lequel, entre la ligne de liaison imaginaire passant par le premier (4a, S1) et le deuxième (4b, S2) élément capteur et le troisième élément capteur (4c, S3), est disposé un corps de retenue (10) dont la distance au troisième élément capteur (4c, S3) est inférieure à celle à la ligne de liaison imaginaire.

10. Procédé destiné à l'exploitation d'un débitmètre thermique (1) destiné à la détermination et/ou à la surveillance du débit massique ($\Phi_M$) et/ou de la vitesse d'écoulement ($v_D$) d'un produit (3) s'écoulant à travers une conduite (2), avec au moins trois éléments capteurs (S1, S2, S3) et une unité électronique (9) selon au moins l'une des revendications précédentes, dans un mode de fonctionnement normal (11) et dans un mode de diagnostic (13),

procédé pour lequel, dans le mode de fonctionnement normal (11), au moins l'un (S1) des au moins trois éléments capteurs (S1, S2, S3) est chauffé avec une puissance de chauffage réglable (P1) et sa température (T1) est mesurée, et le débit massique ($\Phi_M$) et/ou la vitesse d'écoulement ($v_D$) du produit (3) est déterminée, et procédé pour lequel, en mode diagnostic (13), au moins les étapes séquentielles suivantes sont exécutées :

- un premier élément capteur (S1) est chauffé avec une première puissance de chauffage (P11) et sa température (T11) est mesurée,

- un deuxième élément capteur (S2) est chauffé avec une deuxième puissance de chauffage (P12) et sa température (T12) est mesurée,

- la température du produit ($T_M$) est mesurée au moyen d'un troisième élément capteur (S3) non chauffé,

- à partir de la puissance de chauffage (P11, P12) et/ou de la température (T11, T12) du premier (S1) ou du deuxième (S2) élément capteur et/ou d'au moins une grandeur dérivée d'au moins l'une de ces grandeurs, on détermine en continu le débit massique ($\Phi_M$) et/ou la vitesse d'écoulement ($v_D$) du produit (3), et simultanément

- à partir d'une comparaison par paires des températures (T11, T12, ...) et/ou des puissances de chauffage (P11, P12, ...) du premier (S1) et/ou du deuxième (S2) élément capteur et de la température ($T_M$) du troisième élément capteur (S3) et/ou à partir d'au moins une grandeur dérivée des températures (T11, T12, ... ) et/ou des puissances de chauffage (P11, P12, ...), une information sur l'état ($D_1$, $D_2$, $D_3$) d'au moins l'un des au moins trois éléments capteurs (S1, S2, S3) est obtenue et/ou une correction de la valeur mesurée pour le débit massique ($\Phi_M$) et/ou la vitesse d'écoulement ($v_D$) est effectuée et/ou un message sur l'état ($D_1$, $D_2$, $D_3$) d'au moins l'un des au moins trois éléments capteurs (S1, S2, S3) est généré et émis.

11. Procédé selon la revendication 10, pour lequel le sens d'écoulement (3a) du produit (3) est déterminé à partir d'une comparaison par paires des températures (T11, T12, ...) et/ou des puissances de chauffage (P11, P12, ...) et/ou à partir d'au moins une grandeur dérivée des températures (T11, T12, ...) et/ou des puissances de chauffage (P11, P12, ...).

12. Procédé selon la revendication 10 ou 11, pour lequel le débit massique ($\Phi_M$), la vitesse d'écoulement ($v_D$), le sens d'écoulement (3a) du produit (3) et/ou une information sur l'état ($D_1$, $D_2$, $D_3$) d'au moins l'un des au moins trois éléments capteurs (S1, S2, S3) sont déterminés sans interruption et simultanément.

13. Procédé selon au moins l'une des revendications 10 à 12, pour lequel, avant le chauffage simultané d'au moins deux des au moins trois éléments capteurs (S1, S2, S3) avec une puissance de chauffage réglable (P1, P2, P3), on procède à un équilibrage (12) des températures de produit mesurées (T1, T2, T3), et on calcule le cas échéant un terme de correction de température ($\Delta T_{kor,1,2}$, $\Delta T_{kor,1,3}$, $\Delta T_{kor,2,3}$) et on l'applique à toutes les mesures suivantes.

14. Procédé selon au moins l'une des revendications 10 à 13, pour lequel une comparaison des coefficients de puissance PC des au moins trois éléments capteurs (S1, S2, S3) est effectuée.

15. Procédé selon au moins l'une des revendications 10 à 14,

pour lequel le débitmètre (1) comporte exactement trois éléments capteurs (S1, S2, S3), lequel procédé comprend les étapes suivantes :

en mode de fonctionnement normal (11), le premier élément capteur (S1) est chauffé par une première puissance de chauffage (P11), la température dudit élément capteur est mesurée, et le débit massique ($\Phi_M$) et/ou la vitesse de débit ($v_D$) sont déterminés,

dans un premier intervalle de temps (13a) du mode de diagnostic (13),

- le premier (S1) et le deuxième élément capteur (S2) sont chauffés,
- le débit massique ($\Phi_M$) et/ou la vitesse de débit ($v_D$) sont déterminés à l'aide du premier élément capteur (S1), et
- une comparaison des coefficients de puissance PC(S1,S3) et PC(S2,S3) est effectuée dans un deuxième intervalle de temps (13b) du mode de diagnostic (13),
- le premier (S1) et le troisième (S3) éléments capteurs sont chauffés,
- le débit massique ($\Phi_M$) et/ou la vitesse d'écoulement ($v_D$) sont déterminés à l'aide du premier (S1) élément capteur, et
- une comparaison des coefficients de puissance PC(S1,S2) et PC(S3,S2) est effectuée et le sens (3a, $R_2$) du produit

en écoulement (3) en est déterminé, et

dans un troisième intervalle de temps (13c) du mode de diagnostic (13),

- le deuxième (S2) et le troisième (S3) éléments capteurs sont chauffés
- le débit massique ($\Phi_M$) et/ou la vitesse d'écoulement ($v_D$) sont déterminés à l'aide du deuxième (S2) élément capteur, et
- une comparaison des coefficients de puissance PC(S2,S1) et PC(S3,S1) est effectuée et le sens (3a, $R_3$) du produit en écoulement (3) en est déterminé,

procédé pour lequel, à l'aide des coefficients de puissance PC(S1,S2), PC(S1,S3), PC(S2,S1), PC(S2,S3), PC(S3,S1), PC(S3,S3) dans les trois intervalles de temps (13a, 13b, 13c), une information sur l'état ($D_1$, $D_2$, $D_3$) d'au moins l'un des au moins trois éléments capteurs (S1, S2, S3) est obtenue et/ou une correction de la valeur mesurée pour le débit massique ($\Phi_M$) et/ou la vitesse d'écoulement ($v_D$) est effectuée et/ou un message sur l'état ($D_1$, $D_2$, $D_3$) de l'au moins un élément capteur (S1, S2, S3) est généré et émis.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010040285 A1
- DE 102009045956 A1
- DE 102009045958 A1
- DE 102007023840 B4
- DE 102005057687 A1
- DE 102007023823 A1
- US 8590360 B2